# EUROPÄISCHE PATENTANMELDUNG

(11) **EP 4 036 755 A1**
(43) Veröffentlichungstag der Anmeldung: **03.08.2022**
(21) Anmeldenummer: 21154284.0
(22) Anmeldetag: 29.01.2021
(51) Int. Cl.: G06F 16/332

(54) **VERFAHREN ZUR GENERIERUNG UND BEREITSTELLUNG EINER EINEM NUTZER DARGEBOTENEN INFORMATION EINES DIENSTES**

(71) Anmelder: Deutsche Telekom AG, 53113 Bonn (DE)
(72) Erfinder: Minow, Jascha, 64625 Bensheim (DE); Jahn, Carl, 65191 Wiesbaden (DE); El Mallouki, Said, 56329 St. Goar (DE); Platschek, Martin Michael, 13347 Berlin (DE)
(74) Vertreter: Braun-Dullaeus Pannen Emmerling Patent- & Rechtsanwaltspartnerschaft mbB

(57) **Zusammenfassung**

Verfahren zur Generierung und Bereitstellung einer einem Nutzer dargebotenen Information eines Dienstes, wobei aus der Information ein Ausgabetext generiert wird und wobei der Ausgabetext dem Nutzer dargeboten wird, wobei zur Bereitstellung des Ausgabetextes der Ausgabetext in einem ersten Schritt an einen Text-Analyse-Service übergeben wird (7), von dem eine Analyse der Komplexität des Ausgabetextes (8) und/oder einer Analyse der Satzzeichen und Bestimmung von Textpassagen des Ausgabetextes (9), die wichtig für die Betonung und die Pausen sind und/oder einer Analyse der Ausgabetext-Formatierung (10) und/oder einer Analyse der Wort-Wichtigkeit im Ausgabetext (11) und/oder eine Klassifizierung (12) des Empfängers durchgeführt wird, wobei das Ergebnis des Text-Analyse-Service in Form von Text-Analyse Metadaten ausgegeben wird (13), und dass in einem zweiten Schritt der Ausgabetext, die Ausgabetext-Analyse-Metadaten und Nutzer-Metadaten an einen Kategorisierungs-Service übergeben werden (15), welcher ein Ausgabe-Medium kategorisiert und zumindest ein Ausgabe-Medium auswählt, mit dem die Sprachausgabe dem Nutzer dargeboten wird; sowie System zur Durchführung eines erfindungsgemäßen Verfahrens.

## Beschreibung

Die Erfindung betrifft ein Verfahren zur Generierung und Bereitstellung einer von einem Dienst einem Nutzer dargebotenen Information, wobei aus der Information ein Ausgabetext generiert wird und wobei der Ausgabetext bereitgestellt wird, welche dem Nutzer dargeboten wird. Des Weiteren betrifft die Erfindung ein System zur Durchführung des Verfahrens.

Sprachassistenten, oft auch als virtuelle Assistenten bezeichnet, verbreiten sich immer weiter und nehmen im täglichen Leben immer eine größere Rolle ein. Dabei geht es schon lange nicht mehr darum einfach nur eine Erinnerung zu erfassen oder die Einkaufsliste für den nächsten Einkauf mit Hilfe von Sprachbefehlen zu befüllen. Die virtuellen Assistenten entwickeln sich insbesondere zu einem wichtigen Instrument der Informationsausgabe, mit dem beispielsweise ein Unternehmen mit seinen Kunden in Dialog treten kann.

Der Nutzer spricht den jeweiligen virtuellen Assistenten über ein Telekommunikations-Endgerät an, welches mit einem Netzwerk, insbesondere dem Internet, verbunden ist. Ein wesentlicher Bestandteil des virtuellen Assistenten ist der im Netzwerk vorgehaltene Dienst, welcher die dem Nutzer darzubietende Information generiert. Das Telekommunikations-Endgerät kann ein insbesondere nutzereigenes Smartphone bzw. ein Tablet oder ein Computer sein, aber auch ein öffentliche zugänglicher Netzwerk-Zugriffspunkt mit Verbindung zu einem virtuellen Assistenten.

Dabei spielt es keine Rolle, ob der vom Nutzer angesprochene virtuelle Assistent selbst den Dienst bereitstellt oder dieser von einem Drittanbieter zur Verfügung gestellt wird. Ein von einem Drittanbieter zur Verfügung gestellter Dienst ermöglicht es diesem Dritten, auf einem fremden virtuellen Assistenten unter eigenem Namen oder zumindest mit eigenem Inhalt präsent zu sein. Beim dem vom Amazon angebotenen Sprachassistenten "Alexa" heißen solche Dienste "skills", während der "Google Assistant" sie unter dem Begriff "action" führt. Ein von dem Anbieter des virtuellen Assistenten vorgehaltener eigener Dienst wird meist als "Voice App" bezeichnet.

Unter einem Dienst ist somit die Programmierung beziehungsweise Funktionalität des virtuellen Assistenten zu verstehen, welche die Information generiert, die dem Nutzer dargeboten werden soll. Diese wird dann als Ausgabetext bereitgestellt, in Audio-Daten umgewandelt und dem Nutzer anschließend mittels Sprachausgabe dargeboten. Die Bereitstellung des Ausgabetextes kann als Reaktion auf eine Nutzereingabe erfolgen. Darüber hinaus der Ausgabetext aber auch als Reaktion auf von dritter Seite eingehender Informationen erstellt werden, wie beispielsweise auf einem Anrufbeantworter hinterlassene Nachrichten, Wetterberichte bzw. Warnungen oder eingehende Meldungen von Medien.

Kunden nutzen die virtuellen Assistenten immer mehr auch für komplexere Fragen, die einen langen Antwortsatz voraussetzen oder eine differenzierte Antwort erfordern. Beispielsweise kann es auf die Frage "Wie ist das Wetter in Darmstadt" unterschiedliche Antworten mit sehr granularen Unterschieden in den Detail-Informationen geben. Gleiches gilt auch für Neuigkeiten oder Nachrichten, welche vom virtuellen Assistenten für den Nutzer empfangen und diesem dargeboten werden können.

Für viele Kunden stellt es jedoch ein Problem dar, bei längeren Ausgabetexten, die vom virtuellen Assistenten vorgesprochen werden, der Antwort vollständig zu folgen und die benötigten Informationen herauszubekommen. Ein wichtiger Grund dafür, dass die Antwort für die Kunden nicht einfach verstanden werden kann, ist die fehlende Betonung von Satzzeichen, Textformatierung oder Geschwindigkeit der Textausgabe. Weiterhin wird von den aktuellen virtuellen Assistenten das Ausgabemedium nicht betrachtet. Für manche Antworten wäre es jedoch hilfreich, weitere Daten, z.B. visuelle, einzublenden oder das Ausgabemedium anhand der vorgegebenen Situation anzupassen.

Heutige technische Lösungen, die einen zur Sprachausgabe bestimmten Text in Sprache (TTS) umwandeln, berücksichtigen sogenannte SSML Tags. Diese speziellen Tags dienen als Marker in der Antwort um der TTS Engine mitzuteilen, welche bestimmten Abschnitte der Antwort in einer anderen Sprache getätigt werden sollen. Weiterhin ist es zur Zeit möglich, Pausen zwischen den Wörtern oder die gesprochenen Wörter pro Minuten für den gesamten Text anzugeben.

Diese Anmeldung stellt sich die Aufgabe, die Verständlichkeit einer als Ausgabetext vorliegenden Information für den angesprochenen Nutzer weiter zu verbessern.

Hierzu schlägt sie vor, das eingangs erwähnte Verfahren dahingehend zu verbessern, dass zur Bereitstellung des Ausgabetextes der Ausgabetext in einem ersten Schritt an einen Ausgabetext-Analyse-Service übergeben wird, von dem eine Analyse der Komplexität des Antworttextes und/oder einer Analyse der Satzzeichen und Bestimmung von Textpassagen des Ausgabetextes, die wichtig für die Betonung und die Pausen sind und/oder einer Analyse der Ausgabetext-Formatierung und/oder einer Analyse der Wort-Wichtigkeit im Ausgabetext und/oder eine Klassifizierung des Empfängers durchgeführt wird, wobei das Ergebnis des Ausgabetext-Analyse-Service in Form von Ausgabetext-Analyse-Metadaten ausgegeben wird, und dass in einem zweiten Schritt der Antworttext, die Ausgabetext-Analyse-Metadaten und Nutzer-Metadaten an einen Kategorisierungs-Service übergeben werden, welcher zumindest ein Ausgabe-Medium auswählt, mit dem der Ausgabetext dem Nutzer dargeboten wird.

Darüber hinaus schlägt diese Anmeldung ein System zur Durchführung des erfindungsgemäßen Verfahrens vor, aufweisend ein mit einem Netzwerk verbundenes Eingabe-Medium und Ausgabe-Medium, wobei das Netzwerk den Dienst, den Ausgabetext-Analyse-Service und den Kategorisierungs-Service umfasst.

Die mit den jeweiligen abhängigen Ansprüchen gefassten Merkmale betreffen besonders bevorzugte Ausführungsformen der Erfindung.

Ein erster wesentlicher Grundgedanke der Erfindung ist es somit, den Ausgabetext mit zumindest einer der genannten Techniken zu analysieren, die Bestimmung der Komplexität, der Satzzeichen, insbesondere der damit zusammenhängenden Betonungen und Pausen, sowie der Textformatierung, beispielsweise der Absätze, Einrückung und Aufzählungen des Ausgabetextes. Diese Ausgabetext-Analyse dient der Extraktion von für die Verständlichkeit der Sprachausgabe wichtigen Eigenschaften und Markern aus dem Ausgabetext. Ein weiterer wesentlicher Grundgedanke der Erfindung ist es, das Ausgabe-Medium für die Sprachausgabe zu kategorisieren, also zu bestimmen, auf welchem Ausgabe-Medium die Sprachausgabe des Ausgabetextes abgespielt werden soll. Hierbei kann es sich zum Beispiel um das Telekommunikations-Endgerät des Nutzers, mit diesem beispielsweise über Bluetooth verbundene Peripherie-Geräte oder ein mit dem Netzwerk verbundenes Abspielgerät wie ein Fernseher, ein Radio und ein Lautsprecher, handeln.

Mit Hilfe dieser beiden Schritte wird die Verständlichkeit der Sprachausgabe des Ausgabetextes deutlich verbessert.

In einem ersten Schritt wird hierzu der generierte Ausgabetext einer Analyse unterzogen. Die aus der Analyse resultierenden Ausgabetext-Analyse-Metadaten werden dann zusammen mit dem Ausgabetext an den nächsten Schritt der Kategorisierung des Ausgabe-Mediums zur Verfügung gestellt.

Für die Generierung der Sprache aus einem gegebenen Ausgabetext ist es erfindungsgemäß möglich, den Ausgabetext mit zumindest einer der benannten Analyse-Techniken zu analysieren, die in der obigen Reihenfolge näher beschrieben werden.

Bei der erstgenannten Technik handelt es sich um die Komplexitäts-Analyse. Die Bestimmung der Komplexität erfolgt vorzugsweise durch eine Kategorisierung des Textes, insbesondere mit Hilfe eines Machine Learning Models, welches den Text kategorisiert und einen Komplexitäts-Score bestimmt. Der so ermittelte Index bewertet die Lesbarkeit eines Antworttextes. Solche Komplexitäts- oder Lesbarkeits-Scores sind bekannt, sie bewerten sprach- und textgenrespezifisch und geben einen numerischen Wert aus. Sie unterscheiden beispielsweise in Bezug auf das Textgenre die Lesbarkeit einer allgemeinen Information, eines wissenschaftlichen Inhalts, eines Romans, oder einer persönlichen Nachricht.

Die Analyse der Satzzeichen und Bestimmung der Textpassage, die wichtig für die Betonung und Pausen erfolgt vorzugsweise durch eine Tokenization des Textes und/oder eine Wort- und/oder Zeichen-Suche anhand einer vorgebebenen formalen Grammatik. Der Tokenizer zerlegt den Ausgabetext in logisch zusammengehörende Einheiten, die sogenannten Tokens, während anhand der formale Grammatik festgestellt werden kann, ob ein erkanntes Wort oder Zeichen ein Element einer Sprache ist.

Die Text-Formatierung/Struktur-Analyse bedient sich vorteilhafterweise einer regulären Grammatik bzw. Sprache. Hierdurch werden Text-Formatierung, wie beispielsweise ein Absatz, eine Einrückung oder eine Aufzählung gefunden und für die Weiterverarbeitung markiert. Mit Hilfe dieser Analyse lassen sich insbesondere die Verständlichkeit der Sprachausgabe verbessernde sprachlichen Pausen und Betonungen festlegen.

Die Wort-Wichtigkeits-Analyse betrifft die Hervorhebung oder Betonung von Zusammenhängen in dem Ausgabetext. Hierbei werden besondere Charakteristiken in dem Ausgabetext bestimmt, außerdem können Nutzer-Präferenzen mit einbezogen werden. Dies kann insbesondere anhand eines Machine Learning Models erfolgen. Wichtig bei dieser Analyse ist es, besondere Information sprachlich hervorzuheben und auf Besonderheiten in Dialekten/Sprachen einzugehen. Diese Zusammenhänge werden im Folgenden anhand von vier Beispielen näher erläutert.

Eine Telefonnummer aus einer Anrufbeantworter-Nachricht sollte langsamer und sehr klar gesprochen werden, um den Kunden die Möglichkeit zu bieten diese Nummer zu notieren.

Für eine Wegbeschreibung ist es wichtig besondere Anweisungen deutlicher zu betonen als andere, zum Beispiel "Nach dem ROTEN Gebäude rechts". Die Betonung ist hierbei und im nächstfolgenden Beispiel groß geschrieben

Wichtigere Information in einem Text sollten sprachlich hervorgehoben werden, zum Beispiel "Donald Trump wurde NICHT als US-Präsident wiedergewählt"

Auf die Frage eines Nutzers "Was heißt XY auf Englisch" wird als Antwort der Ausgabetext "Der englische Begriff für XY lautet ABC" generiert. Die Aussprache des übersetzten Worts sollte dabei gemäß englischer Phonetik erfolgen.

Eine weitere Technik betrifft die Bestimmung des Empfängers der Botschaft. Hierbei wird vorzugsweise durch ein Machine Learning Modell klassifiziert, welche Gruppe oder welche Person als Empfänger der Nachricht gilt, zum Beispiel eine Familie, ein Kind, oder ein Erwachsener, und in welcher Höflichkeitsform der oder die Empfänger angesprochen werden, beispielsweise formal oder nicht-formal.

Die Kategorisierung des Ausgabe-Medium erfolgt mittels insbesondere automatischer Einstufung des Ausgabetextes anhand verschiedener Kriterien. Auf dieser Basis erfolgt eine Ausgabe mittels des oder der zum jeweiligen Inhalt passenden Ausgabe-Medien. Antworten werden also durch das System kategorisiert und zum passenden Ausgabe-Medium geroutet, um zum Beispiel private Daten zu schützen, die Verständlichkeit zu erhöhen und neue Anwendungen für den virtuellen Assistenten zu ermöglichen.

Die Kategorisierung der Textausgabe erfolgt vorzugsweise auf Basis des tatsächlichen Inhaltes der Textausgabe. Kriterien hierfür können neben dem Inhalt der Textausgabe auch die gestellte Frage oder die für diesen Nutzer bekannten Ausgabe-Medien sein. Auch die Quelle der Textausgabe, also der genutzte Dienst respektive Skill kann mit in die Kategorisierung einbezogen werden, sowie ggf. vorhandene Nutzervorgaben zum jeweiligen Dienst/Skill. Vorzugsweise erfolgt die Kategorisierung mittels Kalkulation eines Vertraulichkeits-Scores, welcher der Textausgabe des Dienstes zugeordnet wird.

So kann beispielsweise eine Nachricht vom Anrufbeantworter als privat eingestuft werden, anhand ihres Inhaltes aber als besonders dringend. Aufgrund dieser Kategorisierung kann der virtuelle Assistent nun den Nutzer fragen, auf welchem Kanal respektive Ausgabe-Medium er die Antwort erhalten möchte. Vorzugsweise kann dies der Nutzer auch vorab per Einstellung vorgeben.

Der Kanal bzw. das Ausgabe-Medium kann beispielweise eine Companion App, eine direkte Audiowiedergabe auf dem Eingabe-Medium, oder die Ausgabe per Bluetooth auf ein Headset sein. Zur korrekten Identifikation des Nutzers wird vorzugsweise die Voiceld Technologie verwendet. Gibt es für die bestimmte Kategorie und Einstufung bereits eine Einstellung im Profil des Nutzers, beispielsweise weiterleiten an die Companion App, wird diese entsprechend ausgeführt.

Handelt es sich dabei um eine als öffentlich eingestufte Antwort wie ein Newsupdate oder eine Unwetterwarnung, so wird diese vorzugsweise sofort wiedergegeben wie bisher auch. Der Nutzer hat dabei natürlich die Möglichkeit, die jeweiligen Kategorien gemäß seines Nutzungsprofils einzurichten. Je nachdem mit welchen Geräten der Nutzer mit dem virtuellen Assistenten interagiert, kann es per Companion App, am Gerät verbundenem Bluetooth-Headset, am Smartphone verbundenen Headset, Antwortkarte in der Companion App oder anderem Wege übermittelt werden. Daraus ergibt sich der Vorteil, dass die Antwort User-spezifisch an das richtige Ausgabe-Medium gesendet werden kann.

Weiterhin können die Ausgabetext-Analyse-Metadaten dazu verwendet werden, das richtige Ausgabe-Medium zu wählen. Soll eine Wissensfrage beantwortet werden ist es unter Umständen vorteilhaft, weitere nicht sprachliche Daten anzuzeigen, zum Beispiel visuelle Daten wie Bilder oder sogar Videos. Dies ermöglicht eine visuelle Unterstüzung des gesprochenen Wortes und auch schnellere Aufnahmefähigkeit durch Bilder z.b. bei der Wettervorhersage. Wenn das Eingabe-Medium aber diese Art der Daten nicht unterstützt, sollte vorteilhafterweise ein anderes vorhandenes Ausgabe-Medium für die zusätzliche Darstellung gewählt werden. Somit ist es möglich eine Antwort in textueller Form inklusive Bilder and ein Ausgabe-Medium mit Bildschirm zu senden (Visuelle Unterstützung zum gesprochenen Wort) und die Audio Ausgabe an ein anderes Gerät weiterzuleiten.

Nach der erfindungsgemäßen Analyse und Kategorisierung des Antworttextes wird die Sprachausgabelnformationsdarbietung entsprechend generiert und insbesondere als Sprachausgabe an das jeweilige Ausgabe-Medium versandt oder ihm bereitgestellt.

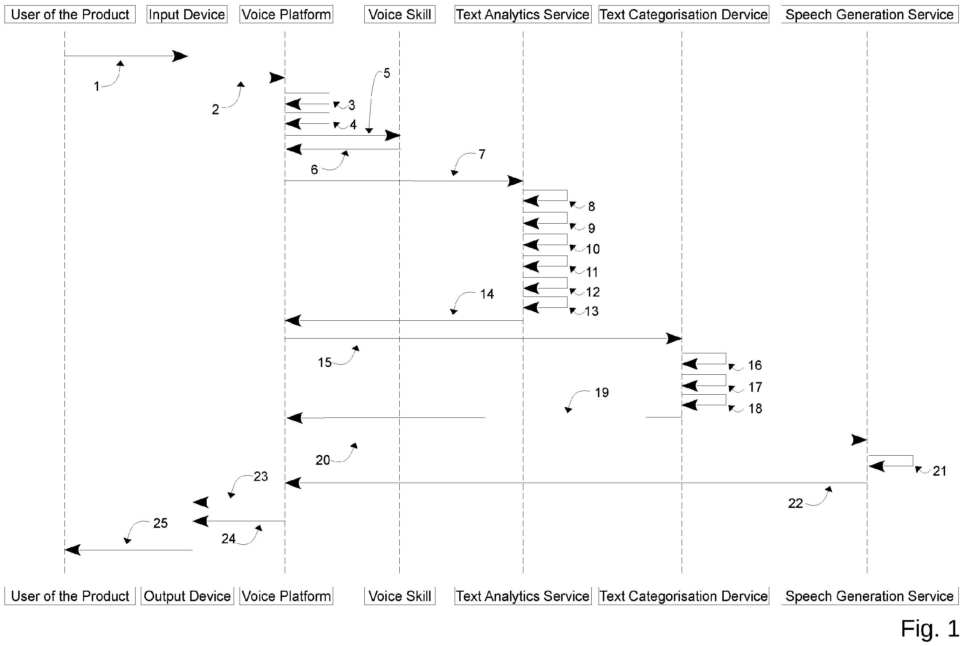

Im Folgenden wird ein besonders vorteilhafter Ablauf des erfindungsgemäßen Verfahrens anhand des in Figur 1 gezeigten Ablaufdiagramms näher erläutert. Dabei zeigen die gestrichelten Linien die einzelnen Objekte des Verfahrens, den Nutzer "User of the Produkt", das Telekommunikations-Endgerät "Input device" sowie die weiteren Services, welche Verfahrensschritte vornehmen. Die Pfeile zwischen den Objekten zeigen eine Datenübergabe an ein anderes Objekt, auf das selbe Objekt zurückverweisende Pfeile eine Verfahrenshandlung innerhalb des Objektes. Der Verfahrensablauf schreitet von oben nach unten hin fort.

Das Verfahren beginnt mit einer per Sprache eingegebenen Frage 1 des "User of the Produkt", welche vom "Input device" als Audiodaten 2 per Netzwerk an die "Voice Platform" des virtuellen Assistenten übermittelt werden. Von der "Voice Platform" werden die Audiodaten mittels einer speech to text (STT) Funktion 3 umgewandelt und per natural language understanding (NLU) 4 interpretiert.

Die so gewonnen Daten werden an den Dienst, hier als "voice skill" bezeichnet, übergeben, siehe Pfeil 5. Der vom "voice skill" generierte Ausgabetext wird von der "Voice-Platform" empfangen (Pfeil 6) und an den "Text-Analytics-Service" übermittelt (Pfeil 7). Der "Text-Analytics-Service" führt die folgenden Analyse-Techniken durch, die Analyse der Komplexität des Ausgabetextes 8, die Analyse der Satzzeichen und Bestimmung von Textpassagen des Ausgabetextes 9, die wichtig für die Betonung und die Pausen sind, die Analyse der Ausgabetext-Formatierung 10, die Analyse der Wort-Wichtigkeit im Ausgabetext 11 und die Klassifizierung des Empfängers 12. Anschließend werden hieraus die Text-Analyse Metadaten 13 erzeugt und diese an "Voice Platform" zurück gesandt (Pfeil 14).

Die Text-Analyse Metadaten, werden zusammen mit Metadaten zum Ausgabetext, verfügbaren Nutzer-Metadaten, hierunter können Informationen über den "User of the Produkt" und ihm zur Verfügung stehende Ausgabe-Medien, Nutzervorgaben zum Dienst und zum Inhalt der Information fallen, an den "Text-Categorisation-Service" übergeben (Pfeil 15). Von diesem Service wird die Kategorisierung nach Inhalt 16, die Bestimmung des Vertraulichkeits-Scores 17 und die Auswahl 18 des Ausgabe-Mediums durchgeführt.

Die so ermittelten Metadaten werden wieder an die "Voice Platform" übermittelt (Pfeil 19) und von dieser zusammen mit dem Ausgabetext und allen zuvor generierten Metadaten an den "Speech Generation Service" übersandt (Pfeil 20). Dort werden die Audio-Daten der Sprachausgabe erzeugt 21 und wieder an die "Voice Platform" übermittelt (Pfeil 22). Diese übermittelt die Audio-Daten an das Ausgabe-Medium "Output-Device", oder stellt sie für das "Output Device" bereit. Das "Output-Device" kann identisch mit dem "Input-Device" sein, wie von Pfeil 23 gezeigt, oder auch ein zusätzliches Ausgabe-Medium, beispielsweise zu Darstellung visueller Daten, sein, wie von Pfeil 24 gezeigt. Das oder die Ausgabe-Medien präsentieren dann dem "user of the product" den erfindungsgemäß analysierten und konvertierten Ausgabetext des Dienstes (Pfeil 25).

## Patentansprüche

1. Verfahren zur Generierung und Bereitstellung einer einem Nutzer dargebotenen Information eines Dienstes, wobei aus der Information ein Ausgabetext generiert wird und wobei der Ausgabetext dem Nutzer dargeboten wird,
**dadurch gekennzeichnet,**
**dass** zur Bereitstellung der Sprachausgabe der Ausgabetext in einem ersten Schritt an einen Text-Analyse-Service übergeben wird (7), von dem eine Analyse der Komplexität des Ausgabetextes (8) und/oder einer Analyse der Satzzeichen und Bestimmung von Textpassagen des Ausgabetextes (9), die wichtig für die Betonung und die Pausen sind und/oder einer Analyse der Ausgabetext-Formatierung (10) und/oder einer Analyse der Wort-Wichtigkeit im Ausgabetext (11) und/oder eine Klassifizierung (12) des Empfängers durchgeführt wird, wobei das Ergebnis des Text-Analyse-Service in Form von Text-Analyse Metadaten ausgegeben wird (13), und dass in einem zweiten Schritt der Ausgabetext, die Ausgabetext-Analyse-Metadaten und Nutzer-Metadaten an einen Kategorisierungs-Service übergeben werden (15), welcher zumindest ein Ausgabe-Medium auswählt, mit dem der Ausgabetext dem Nutzer dargeboten wird.

2. Verfahren nach Anspruch 1,
**dadurch gekennzeichnet,**
**dass** Analyse der Komplexität des Ausgabetextes mittels eines Lesbarkeits-Index erfolgt.

3. Verfahren nach Anspruch 1,
**dadurch gekennzeichnet,**
**dass** eine Analyse der Satzzeichen mittels Tokenization und/oder die Bestimmung von Textpassagen des Ausgabetextes mittels einer vorgegebenen formalen Grammatik und/oder einer regulären Sprache vorgenommen wird.

4. Verfahren nach Anspruch 1,
**dadurch gekennzeichnet,**
**dass** die Analyse der Ausgabetext-Formatierung mittels einer regulären Grammatik erfolgt.

5. Verfahren nach Anspruch 1,
**dadurch gekennzeichnet,**
**dass** die Nutzer-Metadaten Informationen zum Dienst enthalten.

6. Verfahren nach Anspruch 1,
**dadurch gekennzeichnet,**
**dass** der Nutzer identifiziert wird und die Nutzer-Metadaten Nutzervorgaben zum Dienst oder zum Inhalt der Information enthalten.

7. Verfahren nach einem der vorangegangenen Ansprüche,
**dadurch gekennzeichnet,**
**dass** der Nutzer mittels VoicelD identifiziert wird.

8. Verfahren nach einem der vorangegangenen Ansprüche,
**dadurch gekennzeichnet,**
**dass** das gewünschte Ausgabe-Medium beim Nutzer erfragt wird.

9. Verfahren nach einem der vorangegangenen Ansprüche,
**dadurch gekennzeichnet,**
**dass** das Ausgabe-Medium entsprechend einer ermittelten Vertraulichkeit der Information gewählt wird.

10. Verfahren nach einem der vorangegangenen Ansprüche,
**dadurch gekennzeichnet,**
**dass** ein weiteres Ausgabe-Medium gewählt wird, über das dem Ausgabetext zugeordnete visuelle Daten dem Nutzer dargeboten werden.

11. Verfahren nach einem der vorangegangenen Ansprüche,
**dadurch gekennzeichnet,**
**dass** zumindest ein Teil des Ausgabetextes dem Nutzer als Sprachausgabe dargeboten wird.

12. Verfahren nach einem der vorangegangenen Ansprüche,
**dadurch gekennzeichnet,**
**dass** die Eingabe eines Nutzers eine sprachliche Eingabe ist, welche von einem Eingabe-Medium an eine Spracherkennungseinheit übermittelt wird.

13. System zur Durchführung eines Verfahrens nach einem der vorangegangenen Ansprüche, aufweisend ein mit einem Netzwerk verbundenes Eingabe-Medium und Ausgabe-Medium, wobei das Netzwerk den Dienst, den Text-Analyse-Service und den Kategorisierungs-Service umfasst.

14. System nach Anspruch 13,
**dadurch gekennzeichnet,**
**dass** das Netzwerk eine Spracherkennungseinheit umfasst.

15. System nach Anspruch 13 oder 14,
**dadurch gekennzeichnet,**
**dass** dem Nutzer zumindest ein Ausgabe-Medium für visuell dargebotene Daten zugeordnet sind.
